# FASCICULE DE BREVET EUROPEEN

(11) **EP 3 768 069 B1**
(45) Date de publication et mention de la délivrance du brevet: **23.02.2022**
(21) Numéro de dépôt: 19715541.9
(22) Date de dépôt: 04.03.2019
(51) Int. Cl.: A01G 17/08

(54) **APPAREIL POUR LA POSE D'ATTACHES FILAIRES**
VORRICHTUNG ZUM ANBRINGEN VON DRAHTBEFESTIGUNGSELEMENTEN
APPARATUS FOR PLACING WIRE FASTENERS

(30) Priorité: 20.03.2018 FR 1870309
(43) Date de publication de la demande: 27.01.2021
(73) Titulaire: PELLENC, 84120 Pertuis (FR)
(72) Inventeur: LOPEZ, Bernard, 84240 La Tour d'Aigues (FR); CHAUDET, Nicolas, 84120 Pertuis (FR); GILBERT, Philippe, 13610 Le Puy Sainte Réparade (FR)
(74) Mandataire: Weber, Etienne Nicolas
(86) Numéro de dépôt international: PCT/FR2019/050475
(87) Numéro de publication internationale: WO 2019/180339

(56) Documents cités:
- EP-A1- 0 763 323
- EP-A1- 1 322 148
- CN-A- 107 642 239

## Description

### Domaine technique

La présente invention concerne un appareil pour la pose d'attaches fllaires. Un tel appareil, encore désigné par "pistolet attacheur" est utilisé pour la fixation entre elles de petites branches ou de rameaux d'arbres, d'arbustes ou d'arbrisseaux, ou encore pour la fixation de sarments de vigne sur un support mince et en particulier sur un fil de palissage.

La fixation se fait au moyen d'un fil d'attache positionné et torsadé par le pistolet attacheur.

Dans le domaine viticole, la fixation des rameaux et sarments de vigne sur des supports de palissage est une opération annuelle fastidieuse nécessitant la pose d'un nombre important d'attaches. Le nombre d'attaches à poser peut varier de 9 000 à 80 000 attaches par hectare de vigne.

L'invention trouve ainsi des applications principalement dans les domaines de l'arboriculture et de la viticulture.

### Etat de la technique antérieure

Une illustration de l'état de la technique est donnée par le brevet EP0763323.

Le brevet EP 0763323 concerne un pistolet attacheur pourvu d'un moteur électrique d'actionnement unique, alimenté à courant continu. Le pistolet attacheur forme une attache torsadée autour d'éléments à attacher lors d'un cycle d'attachage initié par un opérateur pressant une gâchette du pistolet. Le moteur assure un actionnement mécanique d'une tête de pose d'attaches du pistolet pour des fonctions de préparation d'une attache à partir d'un fil d'attache et pour une fonction consistant à torsader le fil d'attache après sa mise en place autour des éléments à attacher.

La tête de pose d'attaches du pistolet comprend un crochet pivotant qui constitue un tronçon d'un guide pour fil d'attache. Afin de contourner les éléments à attacher, le crochet peut pivoter entre une position ouverte permettant le passage dans la tête de pose des éléments à attacher et une position fermée dans laquelle le torsadage du fil d'attache autour des éléments à attacher est possible.

Le moteur est relié à un mécanisme de transmission complexe pour réaliser les principales fonctions du cycle d'attachage, à savoir l'entrainement du fil d'attache, la fermeture du crochet, la coupe du fil d'attache, la rotation du torsadeur et enfin l'ouverture du crochet.

Le mécanisme de transmission comprend une roue d'actionnement séquentiel qui permet lors de sa rotation sur un tour complet de provoquer la fermeture du crochet, l'actionnement du galet d'entrainement du fil d'attache, l'actionnement du couteau et l'ouverture du crochet. Le mouvement de la roue d'actionnement séquentiel est transmis aux différents organes soit par un jeu d'engrenages, pour le galet d'entrainement, soit par un jeu de cames et biellettes pour le crochet et le couteau. Le jeu de cames et biellettes actionnant le crochet comprend un galet presseur coopérant avec le galet entraineur pour embrayer ou débrayer l'avancement du fil d'attache.

Le mécanisme de transmission comprend aussi un torsadeur pour réaliser une torsade du fil d'attache autour des éléments à attacher.

La roue d'actionnement séquentiel et le torsadeur sont couplés au moteur par l'intermédiaire de transmissions à roue libre, respectivement de sens opposé. Ainsi, pour une rotation du moteur dans un premier sens de rotation seule la roue d'actionnement séquentiel est entraînée, alors que le torsadeur reste au repos. A l'inverse, pour une rotation du moteur dans un sens de rotation opposé au premier sens de rotation, seul le tomadeur est entrainé alors que la roue d'actionnement séquentiel reste au repos.

L'entrainement sélectif de la roue d'actionnement séquentiel et du torsadeur a lieu par une action sur la commande du moteur électrique. Un circuit électronique d'alimentation et de commande du moteur est à cet effet prévu pour piloter le sens de rotation et la vitesse de rotation du moteur dans le premier sens de rotation et dans le sens de rotation opposé.

La roue d'actionnement séquentiel comprend deux aimants d'indexation positionnés dans des positions angulaires prédéterminées. Lors du passage d'un aimant d'indexation devant un capteur à effet Hall, un signal instantané est envoyé au circuit de commande du moteur pour initier des changements dans les consignes de commande du moteur (vitesse, sens de rotation).

Il en va de même pour le torsadeur qui comprend deux aimants d'indexation disposés symétriquement et passant successivement lors de la rotation du torsadeur devant un capteur à effet Hall pour générer un signal instantané vers le circuit de commande du moteur et initier là aussi des changements dans les consignes de commande du moteur (vitesse, sens de rotation).

Une première difficulté réside dans le positionnement des aimants d'indexation nécessitant des usinages précis, précision liée à la consigne du moteur initiée lors du signai instantané déclenché par le passage de l'aimant devant le capteur à effet Hall.

Les dispositions angulaires des aimants d'indexation de la roue d'actionnement séquentiel et du torsadeur permettent le déclenchement des différentes phases du cycle d'attachage sur un tour complet de la roue d'actionnement séquentiel et il n'est pas possible de générer un signal vers le circuit de commande du moteur en dehors de ces positions.

Par exemple, une commande spécifique d'arrêt du moteur lorsque l'entrainement du fil d'attache est débrayé nécessiterait la disposition d'un aimant d'indexation supplémentaire sur la roue d'actionnement séquentiel mais aussi nécessiterait que cet aimant génère un signal distinct de celui généré par les autres aimants d'indexation intervenant lors d'un cycle d'attachage pour que son signal soit occulté par le circuit électronique de commande du moteur lors de la réalisation d'un cycle d'attachage. Ainsi la mise en œuvre d'autres fonctions que le cycle d'attachage nécessiterait la multiplication d'aimants d'indexation supplémentaires, chacun de ces aimants générant lors de son passage devant le capteur à effet Hall un signal distinct, occulté durant l'exécution d'un cycle d'attachage, multipliant la complexité de réalisation de l'attacheur. Cette opération, pourtant indispensable pour la maintenance de l'outil et le changement du lien, se fait alors manuellement avec beaucoup d'efforts.

Un autre problème concerne l'inertie du système au moment de la détection d'une position angulaire prédéterminée. Par exemple, il est nécessaire de positionner précisément le torsadeur lors de son arrêt par rapport au guide pour fil d'attache pour permettre le passage libre du fil d'attache lors du prochain cycle d'attachage avant la mise en rotation du torsadeur. Lors de la rotation du torsadeur, son inertie ne rend pas possible son arrêt avec une précision suffisante dans la position angulaire souhaitée. Le moteur est alors d'abord arrêté puis réalimenté pour tourner à une vitesse de rotation limitant fortement l'inertie du torsadeur de façon à arrêter le torsadeur dans sa position prédéterminée à la détection de l'aimant d'indexation suivant. Ce phénomène est d'autant plus important que la vitesse du moteur est grande.

### Exposé de l'invention

Dans ce qui suit, les termes "amont" et "aval" sont compris par rapport à un sens d'avancement d'un fil d'attache le long d'un trajet de fil depuis une entrée de fil d'attache jusqu'à une extrémité du guide de fil dans la tête de pose d'attaches.

Le fonctionnement du pistolet attacheur connu, explicité ci-dessus, permet, lors d'un appui sur la gâchette, de réaliser un cycle complet d'attachage grâce à la détection de positions angulaires prédéterminées de la roue d'actionnement séquentiel ou du torsadeur. En revanche, il ne permet pas sur une action spécifique de l'opérateur d'arrêter automatiquement l'outil dans des positions intermédiaires de ces positions prédéterminées, permettant une mise en position spécifique de ces composants pour faciliter des opérations de maintenance ou l'introduction d'un nouveau fil d'attache par exemple.

Le fonctionnement du pistolet attacheur connu ne permet pas non plus un arrêt instantané de l'outil sur une position prédéterminée lors de la détection d'une telle position. De plus, si un tel arrêt était possible, l'arrêt serait brutal et serait préjudiciable à la pérennité des composants mécaniques de l'outil en provoquant leur usure prématurée, ce qui pourrait limiter très fortement la durée de vie de l'outil.

Ainsi, Il est important de pouvoir, d'une part, définir de nouvelles positions angulaires, distinctes des positions angulaires prédéterminées d'un cycle complet d'attachage, et d'autre part d'anticiper l'arrivée sur n'importe quelle position angulaire, à une précision qui peut être de l'ordre du degré d'angle, pour que la consigne du moteur soit respectée au moment même du passage sur cette position angulaire.

Pour surmonter ces difficultés, l'invention selon la revendication 1 propose plus précisément un appareil pour pose d'attaches, comprenant :
- un guide de fil, pour fil d'attache, s'étendant entre une entrée de fil et une extrémité de guide fixe,
- un crochet pivotant présentant une extrémité de crochet libre, le crochet formant un tronçon du guide de fil et présentant une liberté de pivotement entre une position ouverte dans laquelle l'extrémité de crochet libre est écartée de l'extrémité de guide fixe, et une position fermée dans laquelle l'extrémité de crochet libre est alignée avec l'extrémité de guide fixe,
- un entraîneur mécanique de fil d'attache disposé en amont du crochet,
- un couteau de sectionnement de fil, le couteau étant disposé en amont du crochet,
- un torsadeur rotatif avec des entraineurs de fil d'attache disposés en amont et en aval du crochet, et en aval du couteau, les entraineurs étant configurés pour intercepter un fil d'attache dans une position d'alignement du torsadeur rotatif avec le guide de fil,
- un moteur électrique relié à un mécanisme de transmission comprenant une roue d'actionnement séquentiel du crochet et du couteau,
- un premier capteur de position angulaire de la roue d'actionnement séquentiel, configuré pour délivrer un premier signal de position angulaire continûment variable sur une plage angulaire de rotation de 360 degrés de la roue d'actionnement séquentiel, le premier capteur de position angulaire étant associé à au moins l'un parmi la roue d'actionnement séquentiel et le moteur électrique,
- un circuit électronique de commande du moteur électrique relié au premier capteur de position angulaire et recevant le premier signal de position angulaire du premier capteur de position angulaire, pour un pilotage du moteur en fonction dudit premier signal de position angulaire.

Le fil d'attache, peut comprendre au moins un fil métallique, de préférence gainé, par exemple un fil d'acier doux ou d'acier inoxydable disposé entre deux bandes de papier ou de matière plastique. Une réserve de fil peut être constituée par une bobine, par exemple une bobine portée à la ceinture d'un utilisateur ou sur le pistolet. Le fil d'attache est introduit dans l'appareil de pose d'attache par une entrée de fil arrière tournée vers l'utilisateur.

Le fil d'attache chemine ensuite dans l'appareil de pose d'attaches le long d'un guide, depuis l'entrée de fil jusqu'à une extrémité de guide fixe.

Un tronçon fonctionnellement important du guide de fil est constitué par le crochet de forme arquée pour se positionner autour des éléments à attacher. Le crochet présente deux extrémités dont une première extrémité peut être reliée au corps de l'appareil de pose par une liaison pivot et une deuxième extrémité, libre, vers laquelle se dirige le fil d'attache. Il peut aussi se présenter sous une forme pivotante autour d'un axe central comme dans le document EP1114578. Le crochet fait partie de la tête de pose d'attache de l'appareil.

Dans une position dite "ouverte" du crochet, l'extrémité libre du crochet est distante de l'extrémité de guide fixe, et également distante du torsadeur décrit ultérieurement. La position ouverte du crochet ménage un passage pour recevoir dans la tête de pose d'attaches les éléments à attacher. Il s'agit typiquement d'un rameau, ou d'un sarment de vigne, et d'un fil de palissage.

Dans la position ouverte, un trajet du fil d'attache dans la tête de pose est interrompu.

Le trajet est rétabli lorsque le crochet occupe une position dite "fermée". Dans la position fermée, l'extrémité libre du crochet est adjacente à l'extrémité de guide fixe et alignée avec cette dernière. Un trajet continu pour le fil d'attache est ainsi défini.

L'avancement du fil d'attache le long du trajet est assuré par un entraineur d'avancement. L'entraîneur d'avancement peut comporter un galet d'entrainement mécanique en amont du crochet. Plus précisément le fil d'attache peut être pincé entre le galet d'entrainement et un galet presseur et entrainé par le galet d'entrainement. De préférence, le galet est pourvu de crans pouvant s'incruster dans le lien pour faciliter l'entrainement sans glissement.

Selon une autre possibilité, l'entraineur d'avancement du fil peut aussi comporter un mors coulissant saisissant séquentiellement le fil d'attache dans une position distale par rapport au crochet et le relâchant dans une position proximale.

Comme indiqué précédemment, la tête de pose d'attache comprend aussi un couteau pour découper le fil d'attache après son avancement jusqu'à l'extrémité fixe du guide. La découpe du fil d'attache sur des tronçons d'une certaine longueur, allant du couteau jusqu'à l'extrémité fixe du guide permet de former des attaches de longueur uniforme.

Le couteau peut être formé, par exemple, par une guillotine rotative.

Un autre organe essentiel dans la formation des attaches est le torsadeur rotatif. Le torsadeur intercepte le fil d'attache au voisinage de ses extrémités libres, c'est-à-dire au voisinage de l'extrémité se trouvant dans l'extrémité fixe de guide et l'extrémité se trouvant au voisinage du couteau, après découpe. La rotation du torsadeur et plus particulièrement celle des entraineurs de fil d'attache du torsadeur permet de lier en rotation les extrémités libres du fil d'attache et d'effectuer une torsade permettant de serrer l'attache autour des éléments à attacher.

L'énergie mécanique nécessaire au fonctionnement des différents organes de l'appareil de pose d'attaches peut être fournie par un ou plusieurs moteurs électriques, chacun d'eux étant associé à au moins une fonction de l'outil parmi l'entrainement du lien, le pivotement du crochet, la coupe du fil d'attache et le torsadeur Le ou les moteurs électriques peuvent être alimentés en énergie par une batterie incorporée dans l'appareil de pose d'attaches ou portée par l'utilisateur. La batterie peut être pilotée par le circuit électronique qui commande aussi les moteurs.

Un mécanisme de transmission relie chaque moteur à son ou ses actionneurs et le mécanisme de transmission d'au moins deux fonctions de fermeture du crochet et de coupe du fil d'attache comprend une roue d'actionnement séquentiel.

La roue d'actionnement séquentiel est pourvue d'un certain nombre de cames d'actionnement Les cames coopèrent avec des biellettes pour la commande du couteau et du pivotement du crochet. Une description détaillée du fonctionnement du système de came et de biellettes peut se trouver dans le document EP0763323.

Le moteur électrique associé au mécanisme de transmission de la roue d'actionnement séquentiel est associé à un circuit électronique de commande permettant de piloter l'alimentation électrique des phases du moteur. Ces phases sont de préférence au nombre de trois lorsqu'il s'agit d'un moteur synchrone triphasé sans balais à aimants permanents, dit moteur « brushless ». Ce type de moteur est préféré quand il s'agit de générer des vitesses de travail élevées et d'économiser l'énergie de la batterie grâce à son rendement élevé. Surtout, l'absence de balais élimine complètement les frottements et renforce la durée de vie du moteur.

Le circuit électronique de commande permet notamment de fixer le sens de rotation du moteur et la vitesse de rotation du moteur dans chaque sens avec des phases d'accélération, de maintien d'une vitesse de rotation ou de décélération. Le circuit électronique de commande peut également servir à coordonner, commander et piloter le fonctionnement des différents moteurs de l'outil lorsque l'outil comprend plusieurs moteurs électriques.

Le circuit électronique de commande reçoit un premier signal de position angulaire et détermine les paramètres d'intensité ou de tension instantanés appliqués successivement aux phases du moteur pour commander une vitesse instantanée de rotation du moteur. En particulier, le circuit électronique calcule et applique la fréquence du courant d'alimentation des phases successives d'un moteur électrique quand il s'agit d'un moteur synchrone triphasé sans balai à aimants permanents. Le premier signal de position angulaire est un signal susceptible de rendre compte de la position angulaire instantanée de la roue d'actionnement séquentiel.

Le premier signal de position angulaire est délivré par un premier capteur angulaire de la roue d'actionnement séquentiel

Il convient toutefois de préciser que le premier capteur de position angulaire n'est pas nécessairement associé à la roue d'actionnement séquentiel mais peut aussi être associé au moteur électrique entrainant la roue d'actionnement séquentiel, ou généralement à tout axe de rotation, ou organe en rotation, lié mécaniquement à la rotation de la roue d'actionnement séquentiel avec un facteur de réduction ou de multiplication connu.

Ainsi, on considère que le premier capteur de position angulaire est associé à la roue d'actionnement séquentiel ou au moteur électrique lorsqu'il est sensible à la rotation de la roue d'actionnement séquentiel, à la rotation du moteur électrique ou à la rotation d'un autre organe, par exemple un arbre de transmission, solidaire en rotation de la roue d'actionnement séquentiel ou du moteur électrique.

Le premier signal de position angulaire du premier capteur de position angulaire peut être un signal direct issu d'un capteur ou un signal complexe calculé à partir du signal d'un capteur et/ou de la mesure de paramètres liés au fonctionnement du moteur électrique.

En effet, s'il est possible de positionner un premier capteur de position angulaire sur le moteur électrique, il est également possible, par exemple dans le cas des moteurs synchrones triphasés sans balais à almants permanents, de déterminer la position angulaire du rotor par l'intermédiaire d'un algorithme basé sur les paramètres du moteur comme la tension ou le courant des différentes phases. Les paramètres du moteur étant déterminés directement par le circuit électronique de commande du moteur, il suffit ainsi d'exploiter les informations de cette commande par un calculateur par exemple. Le calculateur peut alors fournir un signal qui est utilisé pour former le premier signal de position angulaire.

Selon une caractéristique de l'invention le premier capteur de position angulaire est un capteur à signal continûment variable qui est sensible à une rotation de la roue d'actionnement sur une plage angulaire de 360 degrés d'angle. En d'autres termes, le premier signal de position angulaire délivré par le capteur permet de rendre compte de manière continue de la position angulaire de la roue d'actionnement séquentiel et notamment de la position angulaire absolue instantanée de la roue d'actionnement séquentiel sur 360 degrés d'angle.

On considère également que le premier signal de position angulaire est continûment variable lorsque le signal est un signal analogique variable ou un signal numérique formé d'une succession continue de valeurs discrètes reflétant la position angulaire absolue instantanée sur un tour complet de la roue d'actionnement séquentiel, chaque position angulaire correspondant ainsi à une valeur distincte. Le nombre de valeurs dans ce cas est de préférence égal ou supérieur à 180, ou supérieur à 360 de manière à disposer d'une précision supérieure au degré d'angle. Il permet en outre d'anticiper l'arrivée de la roue d'actionnement séquentiel sur une position angulaire prédéterminée.

Le capteur se distingue ainsi du capteur utilisé dans le pistolet attacheur du document EP0763323 qui ne délivre qu'un signal impulsionnel au passage d'un almant d'indexation devant le capteur et qui délivre un signal nul ou constant pour toutes les positions de la roue d'actionnement séquentiel autres que celles repérées par un aimant d'indexation.

Le premier capteur angulaire de l'invention peut être un capteur magnétique ou optique.

Dans une réalisation particulière, le premier capteur angulaire peut être un capteur à effet Hall associé à au moins un almant rotatif monté en bout d'arbre, d'un arbre solidaire en rotation avec au moins l'un parmi la roue d'actionnement séquentiel et le moteur électrique, associé à la roue d'actionnement séquentiel. Il peut s'agir de l'arbre de rotation de la roue d'actionnement séquentiel ou un arbre synchronisé avec l'arbre de rotation de la roue d'actionnement séquentiel.

En particulier l'aimant peut comporter deux pôles Nord et Sud montés tournants en bout d'arbre dans un plan perpendiculaire à l'arbre en engendrant un champ magnétique tournant. Le champ magnétique continûment variable avec l'angle de rotation peut être capté par une ou plusieurs sondes à magnétorésistance ou à effet Hall du premier capteur angulaire placé en regard de l'almant selon un axe parallèle à son axe de rotation.

Selon une autre possibilité de réalisation du premier capteur de position angulaire, il peut s'agir d'un capteur angulaire optique associé à une mire circulaire solidaire en rotation de la roue d'actionnement séquentiel La mire peut comporter, par exemple, une succession continue de repères optiques de manière à fournir un premier signal échantillonné de la position angulaire de la roue d'actionnement séquentiel. La mire circulaire peut être portée par la roue d'actionnement séquentiel. Il peut s'agir, dans ce cas, d'un encodeur rotatif optique du commerce.

Selon encore une autre possibilité de réalisation du premier capteur de position angulaire, adaptée à un appareil dans lequel le moteur électrique associé à la roue d'actionnement séquentiel est un moteur synchrone triphasé sans balai à aimants permanents, le premier capteur de position angulaire peut comporter un circuit de mesure d'au moins l'un parmi une tension et un courant des phases du moteur, et une unité de calcul configurée pour établir le premier signal de position angulaire en fonction d'un signal de mesure du circuit de mesure.

Le terme unité de calcul désigne Ici un calculateur, par exemple sous la forme d'un circuit intégré dédié, ou sous la forme d'un processeur exécutant un logiciel.

En particulier la position angulaire relative du rotor du moteur peut être établie par une mesure à un instant donné des caractéristiques de tension ou de courant sur chacune des phases du moteur, la mesure pouvant être établie sur la base des paramètres des signaux de commande envoyés aux phases du moteur par le circuit électronique de commande. A partir de la position du rotor, associée au rapport mécanique de réduction du moteur vers la roue d'actionnement séquentiel, il est ainsi possible de calculer la position angulaire relative de la roue d'actionnement séquentiel. Cette opération peut être effectuée par l'unité de calcul du premier capteur de position angulaire. Il s'agit, par exemple, d'un calculateur associé à une mémoire contenant la valeur du rapport de réduction. Il peut être associé dans ce cas à un capteur de référence sensible à une position angulaire de référence de la roue d'actionnement séquentiel. Le capteur de référence peut être, par exemple, un simple capteur à effet Hall associé à un aimant d'indexation donnant une référence angulaire singulière de la roue d'actionnement séquentiel, par exemple au début du cycle d'attachage. Dans ce cas l'unité de calcul peut être prévue et configurée pour établir le premier signal de position angulaire en fonction d'un signal de mesure de la position angulaire relative du rotor du moteur et de la position angulaire de référence, permettant d'établir une position angulaire absolue de la roue d'actionnement séquentiel.

Le premier signal de position angulaire délivré par le premier capteur de position angulaire communique au circuit électronique de commande du moteur une information de la position angulaire instantanée de la roue d'actionnement séquentiel. Cette information peut ainsi être utilisée pour piloter, par exemple, un arrêt progressif avec une vitesse décroissante jusqu'à l'arrêt de la roue d'actionnement séquentiel dans des positions angulaires prédéterminées. En particulier la vitesse de rotation du moteur peut être asservie à la position angulaire de la roue d'actionnement séquentiel. Elle peut notamment être asservie pour diminuer au fur et à mesure de rapproche de la position d'arrêt souhaitée.

Un tel pilotage permet d'éviter un arrêt brusque de la roue d'actionnement séquentiel tout en réduisant le temps global nécessaire à son arrêt et à son positionnement dans des positions angulaires prédéterminées. Le premier signal de position angulaire permet ainsi d'anticiper les actions de commande du moteur électrique associé à la roue d'actionnement séquentiel, ces actions étant effectives au moment d'une position de la roue d'actionnement séquentiel dans une position prédéterminée. Les positions prédéterminées de la roue d'actionnement séquentiel peuvent être mémorisées au préalable dans le circuit électronique de commande du moteur, et il est ainsi possible de les modifier ou d'en rajouter sans modifier la mécanique de l'outil. Chaque position angulaire prédéterminée de la roue d'actionnement séquentiel peut conduire à des actions différentes au niveau de la commande du moteur électrique, ces positions étant prises en compte dans un logiciel de commande de l'outil soit pour la réalisation du cycle d'attachage, soit pour la réalisation de commandes particulières.

Le circuit électronique de commande du moteur peut en effet comporter un calculateur dédié ou un calculateur piloté par un logiciel de commande. Le circuit électrique de commande du moteur peut également comporter une mémoire pour la mémorisation de positions prédéterminées de la roue d'actionnement séquentiel associées à des phases de commande du moteur. Il s'agit, par exemple, de positions prédéterminées de la roue d'actionnement séquentiel correspondant à un arrêt de la rotation du moteur, un ralentissement du moteur ou une accélération du moteur. L'appareil de pose d'attaches peut comporter, en outre, un deuxième capteur de position angulaire du torsadeur rotatif, un moteur électrique associé au torsadeur rotatif et un circuit électronique de commande dudit moteur électrique associé au torsadeur rotatif, le circuit de commande étant relié au deuxième capteur de position angulaire et recevant un deuxième signal de position angulaire du deuxième capteur de position angulaire pour un pilotage du moteur en fonction dudit deuxième signal de position angulaire.

Le moteur électrique associé au torsadeur rotatif peut être le moteur électrique relié au mécanisme de transmission comprenant la roue d'actionnement séquentiel. Dans ce cas, le circuit électronique de commande du moteur électrique associé au torsadeur rotatif est également le circuit électronique de commande relié au premier capteur de position angulaire, c'est-à-dire le circuit électrique de commande du moteur électrique relié au mécanisme de transmission comprenant la roue d'actionnement séquentiel. Il s'agit d'une réalisation à moteur électrique unique pouvant entraîner sélectivement la roue d'actionnement séquentiel et le torsadeur.

Selon une autre possibilité, le moteur électrique associé au torsadeur peut être un moteur électrique distinct du moteur électrique relié au mécanisme de transmission comprenant la roue d'actionnement séquentiel.

Dans le cas d'une réalisation avec deux moteurs, un seul circuit de commande peut être utilisé pour commander et synchroniser la commande des moteurs de la roue d'actionnement séquentiel et du torsadeur. Le circuit électronique de commande reçoit alors en outre le deuxième signal de position angulaire.

Le deuxième capteur de position angulaire délivre un deuxième signai de position angulaire permettant au circuit électronique de commande du moteur électrique associé au torsadeur de piloter un arrêt de la rotation du moteur lors d'une phase de rotation entralnant le mouvement du torsadeur. L'arrêt de la rotation peut être piloté de manière que le torsadeur soit aligné avec le trajet du fil d'attache au moment de l'arrêt.

On considère que le torsadeur est aligné avec le trajet du fil d'attache lorsque des entralneurs de fil d'attache du torsadeur, c'est-à-dire les bras entraineurs, ou le cas échéant les ouvertures de passage de fil d'attache du torsadeur, se trouvent dans une position permettant le passage libre du fil d'attache lors de son trajet jusqu'à l'extrémité fixe du guide puis d'intercepter les extrémités du fil d'attache après son sectionnement et lors de la rotation du torsadeur.

Tout comme le premier capteur de position angulaire, le deuxième capteur de position angulaire peut être un capteur à effet Hall à signal continûment variable, sensible à une rotation d'un arbre solidaire en rotation avec le torsadeur. Il peut être aussi un capteur optique associé à une mire positionnée autour de l'arbre solidaire en rotation avec le torsadeur.

Le deuxième capteur de position angulaire peut encore comprendre un capteur simple comme, par exemple, un capteur à effet Hall avec un aimant d'indexation signalant le passage de la position angulaire d'une référence du torsadeur. Dans ce cas, le moteur peut être un moteur synchrone triphasé sans balai à aimants permanents dans lequel la position angulaire relative du rotor peut être calculée, conduisant au calcul de la position angulaire absolue du torsadeur en connaissant le rapport de réduction.

Le signal du deuxième capteur angulaire peut être continûment variable sur une plage angulaire de 360 degrés. Il peut également être continûment variable sur une ou plusieurs plages angulaires plus restreintes, chaque plage évoluant de façon continue entre une valeur minimum et une valeur maximum, cette demière étant atteinte lorsqu'un aimant d'indexation passe devant le capteur dans l'exemple d'utilisation d'un capteur à effet Hall. La ou les plages angulaires sur lesquelles le signal est continûment variable sont supérieures à 20 degrés d'angle et de préférence supérieures à 40 degrés d'angle. Le deuxième capteur de position angulaire peut être associé, par exemple, à deux aimants rotatifs montés symétriquement sur un support dans un plan perpendiculaire à l'arbre solidaire en rotation avec le torsadeur, lorsque le torsadeur présente lui-même une symétrie axiale à 180 degrés.

Le deuxième capteur de position angulaire est dans ce cas sensible à une variation d'un champ magnétique induit par les aimants rotatifs à leur approche lors de la rotation de l'arbre en délivrant un signal continûment variable sur une plage angulaire centrée sur chaque aiment. Le torsadeur étant symétrique, la position de chaque aimant permet de positionner le torsadeur de façon alignée avec le trajet du fil d'attache. Le fait de pouvoir détecter l'approche de l'aimant permet d'anticiper une décélération suffisante du moteur pour la stopper alors que le torsadeur est aligné sur le trajet du fil d'attache. La symétrie axiale du torsadeur permet d'effectuer un serrage de l'attache au demi-tour près.

Tout comme pour le premier capteur de position angulaire, on considère que le deuxième signal de positon angulaire du deuxième capteur est continûment variable lorsqu'il permet de rendre compte de la position angulaire de l'arbre avec une précision de l'ordre du degré d'angle sur au moins une plage angulaire supérieure à 20 degrés et de préférence supérieure à 40 degrés. Le signal peut être un signal analogique ou un signal numérique représentatif de toute position angulaire de l'arbre. L'utilisation d'un capteur à effet Hall analogique, par exemple du type DRV5053 de la société Texas Instrument, est possible et permet dans ce cas de connaître la position angulaire d'un aimant par rapport au deuxième capteur de position angulaire de plus de 40 degrés. L'aimant est positionné de préférence au voisinage de l'axe du torsadeur. En effet, plus l'aimant est proche de l'axe de rotation du torsadeur, plus la plage angulaire de détection de celui-ci est étendue. Une plage de détection étendue permet notamment d'anticiper au plus tôt l'arrivée de l'aimant en face du deuxième capteur de position angulaire. Dans le cas d'une disposition de deux aimants symétriquement opposés, correspondant à une symétrie axiale du torsadeur, il est ainsi possible de connaître de façon précise la position d'un des aimants sur un trajet de 180 degrés correspondant à la symétrie axiale du torsadeur, le deuxième signal de position angulaire étant à sa valeur minimale quand les deux aimants sont à égale distance du deuxième capteur angulaire et le signal étant à sa valeur maximale lorsque l'aimant se trouve en face du deuxième capteur de position angulaire.

Comme déjà évoqué ci-dessus, le circuit électronique de commande du moteur peut être configuré pour au moins une première phase d'arrêt de la rotation du moteur électrique, lors de laquelle la vitesse de rotation du moteur électrique est asservie à la position angulaire de la roue d'actionnement séquentiel.

L'asservissement a lieu en fonction du premier signal de position angulaire. Une telle phase d'arrêt correspond également à une phase dite finale d'un procédé de commande de l'appareil décrit ultérieurement.

La vitesse de rotation peut en particulier être asservie pour diminuer à l'approche d'une position angulaire souhaitée avec un arrêt à cette position angulaire.

En particulier la première phase d'arrêt peut être associée à la position ouverte du crochet.

Il s'agit, en d'autres termes, d'une position de la roue d'actionnement séquentiel pour laquelle une came d'actionnement ou un galet d'actionnement vient commander le déplacement d'une biellette provoquant un pivotement du crochet de sa position fermée vers sa position ouverte. Lors du cycle d'attachage, cette position angulaire correspond au départ et à la fin du cycle.

Par ailleurs, et comme mentionné précédemment, l'entraineur d'avancement du fil d'attache peut être un entraîneur à galets, comportant de préférence des crans pour entrainer le lien sans glissement. Il peut comporter un galet d'entrainement et un galet presseur, le galet presseur étant déplaçable entre une position rapprochée du galet d'entrainement et une position relevée libérant un passage entre le galet presseur et le galet d'entrainement pour arrêter, par exemple. l'entrainement du fil d'attache. Dans ce cas, une phase d'arrêt du moteur peut également être associée à la position relevée du galet presseur.

Une telle phase d'arrêt permet le cas échéant un meilleur accès au galet presseur, de manière à faciliter un nettoyage du galet ou son remplacement Elle permet également la mise en place d'un nouveau fil d'attache dans l'entraineur d'avancement.

Le galet presseur peut être actionné par un levier et une biellette poussés par une came de la roue d'actionnement séquentiel.

Par ailleurs, la roue d'actionnement séquentiel peut être une roue dentée reliée au galet d'entrainement par un engrenage. Dans ce cas, le galet d'entrainement est entrainé de manière permanente par la roue d'actionnement séquentiel. Toutefois, l'avancement du fil d'attache n'est opéré que lorsque la roue d'actionnement séquentiel autorise le rapprochement du galet presseur et du galet d'entrainement et donc l'appui du fil d'attache sur le galet d'entrainement.

Les phases d'arrêt correspondant à la position libérée du galet presseur ou à la position ouverte du crochet peuvent être prévues lors d'une rotation du moteur électrique dans un sens de rotation dans lequel la roue d'actionnement séquentiel est entraînée.

Des phases d'arrêt pour un sens de rotation inverse du moteur d'actionnement sont également envisageables, notamment lorsqu'un moteur commun entraine la roue d'entraînement séquentiel et le torsadeur.

En particuller, le circuit électronique de commande du moteur peut être configuré en outre pour au moins une deuxième phase d'arrêt de la rotation du moteur électrique lors de laquelle la vitesse de rotation du moteur électrique est asservie à une position angulaire du torsadeur, la deuxième phase d'arrêt étant associée à la position d'alignement du torsadeur avec le guide de fil, mentionnée plus haut. La deuxième phase d'arrêt est distincte de la première phase d'arrêt

Lors d'une telle phase d'arrêt, le circuit électronique de commande du moteur exploite le deuxième signal de position angulaire du deuxième capteur de position angulaire associé au torsadeur.

Un procédé de mise en place d'un fil d'attache avec un appareil tel que décrit précédemment peut comporter les étapes suivantes :
- une première phase comprenant la fermeture du crochet, l'avancement du fil d'attache jusqu'à l'extrémité de guide fixe, et la coupe du fil d'attache, le moteur électrique associé à la rotation de la roue d'actionnement séquentiel étant commandé par le premier signal de position angulaire de la roue d'actionnement séquentiel.
- une deuxième phase comprenant, l'actionnement du torsadeur, le moteur électrique associé à la rotation du torsadeur étant commandé par le deuxième signal de position angulaire du torsadeur,
- une phase finale comprenant l'ouverture du crochet, un positionnement de la roue d'actionnement séquentiel dans une position de début de cycle d'attachage, puis un arrêt de la rotation du moteur électrique associé à la rotation de la roue d'actionnement séquentiel, ledit moteur électrique étant commandé et asservi en rotation lors de la phase finale par le premier signal de position angulaire de la mue d'actionnement séquentiel.

Le positionnement de la roue d'actionnement séquentiel dans une position de début de cycle d'attachage, permet de débuter Immédiatement un nouveau cycle d'attachage en réponse à un actionnement d'une gâchette par l'utilisateur.

La position de début de cycle est une position dans laquelle le crochet est ouvert. De préférence, dans cette position, le fil d'attache passe déjà en partie dans le torsadeur et s'engage déjà en partie dans le crochet.

La première étape du procédé s'entend comme débutant avec la roue d'actionnement séquentiel dans la position de début de cycle d'attachage.

De préférence, la première phase peut être accompagnée par la fermeture du crochet. Dans ce cas, lors de la phase de ralentissement et d'arrêt du moteur électrique associé à la rotation de la roue d'actionnement séquentiel pour la fermeture du crochet, une vitesse de rotation du moteur électrique est asservie à une position angulaire de la roue d'actionnement séquentiel. Un tel arrêt correspond à la "première phase d'arrêt" évoquée précédemment

L'asservissement de la vitesse de rotation du moteur, associé à la rotation de la roue d'actionnement séquentiel, à la position angulaire de la roue d'actionnement séquentiel par le premier signal de position angulaire permet notamment de faire décroître la vitesse de rotation pour atteindre une vitesse de rotation nulle coïncidant avec l'arrivée du crochet en position fermée.

Cette caractéristique permet d'atteindre la position fermée avec précision tout en augmentant la vitesse générale d'actionnement.

Cette caractéristique permet aussi de réduire plus graduellement la vitesse de rotation du moteur, ce qui peut autoriser la récupération d'une très grande partie de l'énergie cinétique de rotation. En effet, le moteur peut se comporter en générateur pour freiner la rotation de la roue d'actionnement séquentiel et envoyer dans ce cas de l'énergie à la batterie.

De manière similaire, la deuxième phase du procédé peut comporter une phase de ralentissement et d'arrêt du moteur électrique, accompagnée d'un positionnement du torsadeur dans une position alignée avec le guide de fil d'attache. Dans ce cas, lors de la phase de ralentissement et d'arrêt du moteur électrique, une vitesse de rotation du moteur électrique est asservie à une position angulaire du torsadeur. Un tel arrêt correspond à la "deuxième phase d'arrêt" évoquée précédemment.

L'asservissement permet en particulier d'atteindre simultanément l'arrêt de la rotation du moteur et la position alignée du torsadeur.

En outre l'arrêt progressif de la rotation du moteur électrique associé à la rotation du torsadeur, permet d'atteindre la position alignée du torsadeur de manière douce et rapide, sans contrainte excessive sur les organes mécaniques, tout en évitant une phase supplémentaire de positionnement du torsadeur.

Il est possible de rajouter ou de modifier des positions angulaires prédéterminées sans modifier mécaniquement l'outil en modifiant le logiciel de pilotage de l'appareil et les paramètres inscrits dans la mémoire tels que les nouvelles positions angulaires prédéterminées souhaitées. Par ailleurs il est permis de réduire le temps de cycle d'attachage par une augmentation de la vitesse moyenne de rotation de la roue d'actionnement séquentiel et par l'économie d'une phase supplémentaire de positionnement du torsadeur, tout en diminuant les effets néfastes au niveau de la mécanique d'arrêts ou de démarrages brusques du moteur.

D'autres caractéristiques et avantages de l'Invention ressortent de la description qui suit en références aux figures des dessins. Elle est donnée à titre illustratif et non limitatif.

### Brève description des figures

La figure 1 est une perspective d'un appareil pour pose d'attaches conforme à l'invention.
La figure 2 montre le positionnement de l'appareil de la figure 1 autour d'une branche devant recevoir une attache.
La figure 3 est une vue de l'appareil de la figure 1 dont une partie avant du carter et du circuit électronique de commande ont été retirés.
La figure 4 est une perspective détaillée des principaux organes de l'appareil pour pose d'attaches et d'un mécanisme de transmission du mouvement.
La figure 5 est une autre perspective d'organes de l'appareil pour pose d'attaches,
La figure 6 est un diagramme de vitesse de rotation d'un moteur électrique de l'appareil pour pose d'attaches conforme à l'invention donnant un exemple comparatif avec l'état de l'art et illustrant des opérations successives du fonctionnement de l'appareil de l'invention lors d'un cycle d'attachage.

Les figures sont exécutées en échelle libre.

### Description détaillée de modes de mise en œuvre de l'invention

Dans la description qui suit, des parties identiques, similaires ou équivalentes des différentes figures sont repérées avec les mêmes signes références de manière à faciliter le report d'une figure à l'autre.

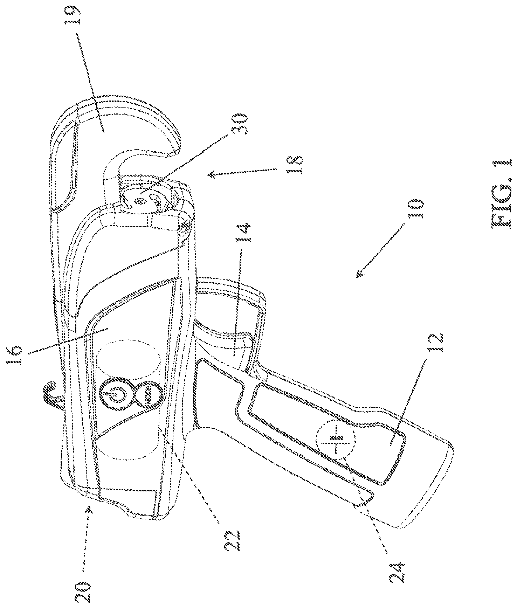

La figure 1 est une perspective de l'appareil pour pose d'attaches. Il se présente sous la forme d'un pistolet attacheur 10, pourvu d'une poignée 12 et d'une gâchette d'actionnement 14. La poignée 12 est solidaire d'un corps d'appareil 16 pourvu d'une tête de pose d'attache 18. La poignée d'actionnement permet de déclencher une opération de pose d'attache.

La tête de pose d'attache 18 présente une extrémité 19 formant un bec. Une extrémité opposée, à l'arrière de la poignée 12, présente une entrée 20 pour fil d'attache. L'entrée 20 pour fil d'attache est une ouverture recevant un fil d'attache continu, déroulé à partir d'une bobine de fil d'attache, par exemple. Le fil d'attache n'est pas représenté.

Le corps d'appareil dans un mode de réalisation préféré renferme un moteur électrique unique 22 pour l'actionnement mécanique de la tête de pose d'attache 18. Le moteur est suggéré en trait discontinu.

Le moteur est alimenté en énergie électrique par une batterie d'accumulateurs 24 logée dans la poignée 12. La batterie est également représentée de manière symbolique.

Au voisinage du bec 19 de la tête de pose d'attache 18, on peut observer la présence d'un torsadeur 30.

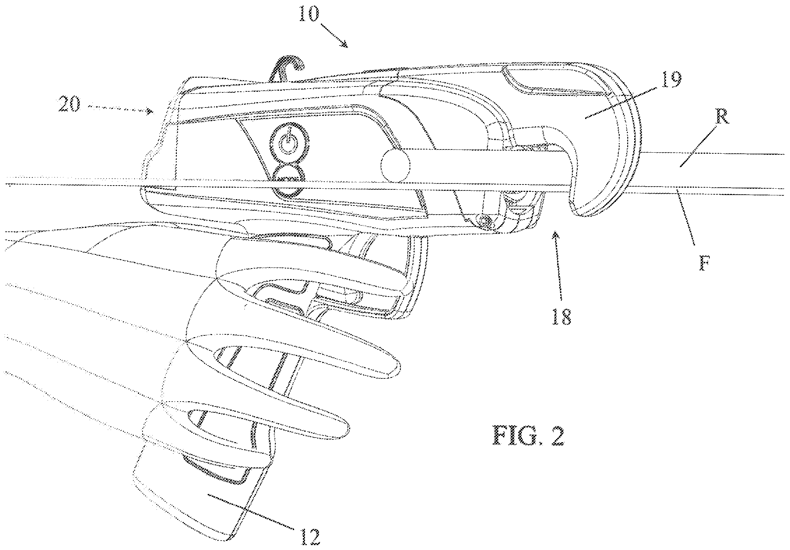

La figure 2 montre l'engagement du bec 19 de la tête de pose d'attache 18 sur un rameau R et un fil de palissage F à solidariser au moyen d'une attache. L'attache n'est pas représentée.

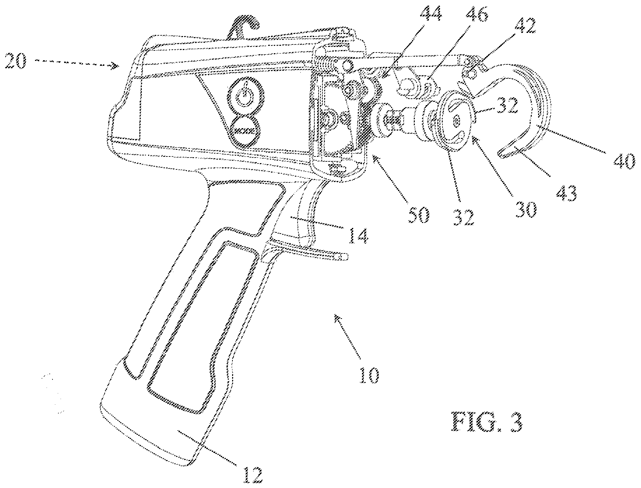

Sur la figure 3, une partie du carter de la tête de pose d'attache 18 a été retiré de manière à en montrer les principaux organes,

On peut noter la présence du torsadeur rotatif 30 déjà visible sur la figure 1. Le torsadeur est pourvu de deux bras préhensiles. Ils constituent des entraineurs de fil d'attache 32 destinés à agripper et entraîner un fil d'attache qui sera torsadé. Par simplification le fil d'attache n'est pas représenté sur la figure.

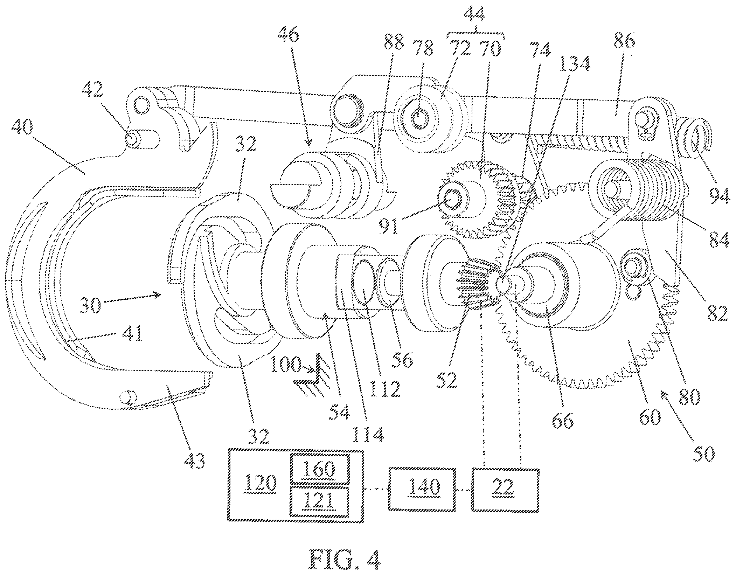

Au voisinage du torsadeur on peut noter la présence d'un crochet 40, Le crochet est abrité par une partie avant du carter formant le bec 19 visible sur les figures 1 et 2. Le crochet 40 est monté pivotant sur un pivot 42. Il est représenté dans une position ouverte permettant l'introduction d'éléments à attacher sous le bec de la tête de pose d'attache. Dans une position fermée, représentée dans la figure 4, le crochet 40 referme le bec.

Un mécanisme de transmission du mouvement 60, associé au moteur électrique, permet de transmettre le mouvement du moteur au torsadeur 30. Le mouvement du moteur est également transmis au crochet 40, à un entraîneur d'avancement 44 du fil d'attache, et à un couteau 46 destiné à couper le fil d'attache.

Le mécanisme de transmission 50 est mieux visible sur la figure 4 qui reprend des composants du mécanisme en trois dimensions dans leur position dans l'outil. Il comprend un pignon d'entrainement 52 d'un arbre longitudinal 54 sur lequel est monté le torsadeur 30. L'arbre longitudinal 54 est relié par l'intermédiaire du pignon d'entrainement 52 à un moteur électrique associé à la rotation du torsadeur.

Dans le mode de réalisation préféré où l'entrainement des organes mécaniques de l'appareil est réalisé par un unique moteur électrique, le pignon 52 est relié à l'arbre longitudinal 54 par un mécanisme à roue libre 56 permettant d'entrainer l'arbre longitudinal 54 pour un sens de rotation du moteur seulement. Une rotation du moteur dans un sens de rotation inverse est libre sans entraîner l'arbre longitudinal 54.

Le mécanisme de transmission 50 comprend par ailleurs une roue d'actionnement séquentiel 80 entrainée par un moteur électrique associé à la roue d'actionnement séquentiel.

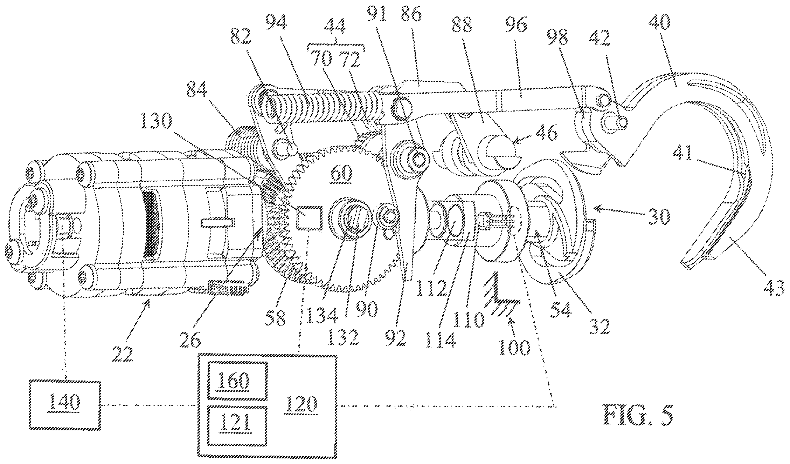

Dans le mode de réalisation préféré, où l'entrainement des organes mécanique de l'appareil est réalisé par un unique moteur électrique, ladite roue est également couplée au moteur par un mécanisme à roue libre 66. Le mécanisme à roue libre 66 permet d'entrainer la roue d'actionnement séquentiel uniquement pour une rotation du moteur dans un sens Inverse à celui entrainant le torsadeur. Une roue dentée de couplage permet de coupler le moteur électrique 22 à la roue d'actionnement séquentiel 60 et au pignon 52 d'entrainement du torsadeur. La roue de couplage n'est pas visible sur la figure 4. Elle apparait sur la figure 5 avec la référence 58.

La roue d'actionnement séquentiel 60 est une roue dentée permettant d'actionner par engrenage l'entraineur d'avancement 44 de fil d'attache. L'entraineur d'avancement 44 comprend un galet d'entrainement 70 associé à un galet presseur 72. Le galet d'entrainement 70 est pourvu de dents destinées à favoriser l'entrainement du fil d'attache. Il est monté sur un arbre 91, solidaire en rotation d'une roue dentée 74 en prise permanente avec la roue d'actionnement séquentiel 60.

Par ailleurs, la roue d'actionnement séquentiel 60 présente sur son flanc un premier galet 80 formant came. Lors de sa rotation, le premier galet formant came 80 vient actionner un levier 82, chargé par un ressort 84 et actionnant le couteau 46 pour la découpe du fil par l'intermédiaire d'une première biellette 86. Le couteau 46 est formé par une guillotine rotative interceptant le trajet du fil d'attache. La guillotine est également pourvue d'un levier d'actionnement 88 avec un pivot recevant la première biellette 86.

La première biellette 86 passe au-dessus de l'arbre 91 portant le galet d'entrainement 70, et porte le galet presseur 72. Le galet presseur est monté en rotation libre autour d'un arbre 78 solidaire de la biellette 86. Ainsi le mouvement de la première biellette 86 permet successivement de faire avancer le fil d'attache en le maintenant sur le galet d'entrainement 70 par une pression du galet presseur 72 puis d'écarter le galet presseur et de faire pivoter le couteau de la guillotine pour découper le fil d'attache. Cette position est retenue pour la figure 4.

La figure 5 montre une autre fonction de la roue d'actionnement séquentiel qui est celle de l'actionnement du crochet 40, Elle montre par ailleurs l'actionnement du mécanisme de transmission 50 par le moteur 22 et par l'intermédiaire d'un pignon conique 26 sur l'arbre moteur coopérant avec la roue conique 58. Ceci correspond au mode de réalisation préféré dans lequel un moteur unique est associé à la fois à la roue d'actionnement séquentiel et à la rotation du torsadeur.

Un deuxième galet 90, formant came, est monté sur la roue d'actionnement séquentiel 60, sur une face opposée à celle recevant le premier galet formant came. Le deuxième galet formant came 90 est prévu pour coopérer avec un deuxième levier 92. Le mouvement du deuxième levier 92 est une rotation autour de l'arbre 91. Il est transmis à une deuxième biellette 96 reliée à un levier 98 du crochet 40 par l'intermédiaire d'un pivot 42. La deuxième biellette 96 est chargée par un ressort 94.

L'interaction du deuxième galet 90 avec le deuxième levier 92 permet un mouvement du crochet 40 depuis sa position fermée, visible à la figure 4, vers sa position ouverte, visible à la figure 5. Lorsque le deuxième galet 90 quitte le deuxième levier 92, le ressort 94 rappelle la deuxième biellette 96 dans une position de repos dans laquelle le crochet est fermé.

Sur les figures 4 et 5 on peut observer que le crochet 40 est pourvu d'une gorge 41, qui forme un tronçon de guide pour le fil d'attache.

Le trajet du fil d'attache passe ainsi entre le galet entraîneur 70 et le galet presseur 72, puis passe dans la guillotine formant le couteau 46 pour s'engager dans la gorge 41 du crochet et atteindre une extrémité de guide fixe 100 située dans le prolongement d'une extrémité libre 43 du crochet 40 à l'arrière du torsadeur 30.

L'ensemble des organes se situant sur le trajet du fil d'attache, et en particulier l'entraineur mécanique 44, la guillotine formant le couteau 46, la gorge 41 du crochet, le torsadeur 30 et l'extrémité de guide fixe 100 constituent un guide pour un fil d'attache. Le fil d'attache en tant que tel, est un accessoire de l'appareil et n'en fait pas partie. Il n'est pas représenté. Le torsadeur 30 et en particulier les bras préhensiles, formant l'entraineur 32 du torsadeur 30, interceptent le fil d'attache en amont du crochet, à la sortie de la guillotine 46, et en aval de l'extrémité libre du crochet, avant l'extrémité de guide fixe 100.

Une bonne interception du fil d'attache est obtenue grâce à un positionnement angulaire approprié du torsadeur 30 représenté à la figure 4. Cette position est atteinte, grâce à un pilotage du moteur électrique dans laquelle sa vitesse est asservie à la position angulaire du torsadeur, notamment à l'approche de la position désirée.

La position angulaire du torsadeur est mesurée grâce à un capteur 110 qui constitue le "deuxième capteur de position angulaire" au sens de l'invention. Le deuxième capteur de position angulaire est associé à deux aimants 112 montés sur un support 114 solidaire en rotation avec le torsadeur 30 de manière symétrique par rapport à l'arbre longitudinal 54 et dans un plan perpendiculaire à cet arbre. Le deuxième capteur angulaire 110 est un capteur analogique de préférence. Il s'agit d'un capteur à effet Hall ou une magnétorésistance sensible aux variations d'un champ magnétique produit par chacun des deux aimants 112. Le champ est maximum lorsque l'un des aimants 112 est au plus près du capteur, mais le capteur commence à délivrer un signal dès l'approche d'un aimant, ou réciproquement jusqu'à son événement Ainsi le deuxième signal de position angulaire émis par le capteur angulaire 110 passe par deux maximums respectivement pour les deux aimants diamétralement opposés par rapport à l'arbre longitudinal 54 lors d'un tour complet de l'arbre. Le signal maximum donne la position précise du torsadeur en position de repos.

Le signal passe de façon continue par un minimum lorsque les deux aimants sont éloignés du capteur angulaire 110 de plus de 20 degrés. Ainsi, il est possible d'anticiper l'arrivée d'un aimant et de réduire en conséquence la vitesse du moteur de façon à le stopper au moment où l'aimant arrivera en face du capteur, sans alors outrepasser sa position.

Il convient de noter ainsi qu'il est possible dans cette condition d'anticiper angulairement lors de chaque tour complet du torsadeur l'arrivée des deux positions caractéristiques, le torsadeur devant s'arrêter de façon précise en fin de cycle de torsadage sur l'une de ces positions sans que le moteur n'ait à être préalablement stoppé pour repartir à vitesse réduite vers la position suivante. Compte tenu du nombre de torsades à effectuer, la détection successive des positions d'arrêt permet ainsi de réduire progressivement la vitesse du moteur pour ne l'arrêter précisément que lors du demier tour dans la position d'arrêt du torsadeur.

Le capteur 110 est relié à un circuit électronique de commande 120 du moteur 22 qui exploite les variations du deuxième signal de position angulaire pour un asservissement de la vitesse de rotation du moteur et pour piloter un arrêt du torsadeur dans une position d'alignement avec le guide du fil d'attache et notamment avec une portion du guide constituée par le crochet 40. L'arrêt du torsadeur est précédé d'une phase de ralentissement lors de laquelle sa vitesse diminue avec l'approche de la position d'arrêt Une ou plusieurs positions d'arrêt peuvent être mémorisées dans une mémoire 121 du circuit électronique de commande.

Le circuit électronique de commande 120 du moteur 22 reçoit également un signal, en l'occurrence le premier signal de position angulaire, d'un autre capteur 130 qui constitue le "premier capteur de position angulaire" au sens de l'invention. Il est visible schématiquement sur la figure 5.

Le premier capteur de position angulaire 130 est de préférence un capteur avec une et de préférence plusieurs sondes à effet Hall. Il s'agit par exemple d'un capteur du type commercialisé par la société MPS sous la référence MP9960.

Le premier capteur de position angulaire 130 est associé à un aimant 132 monté sur un arbre 134 solidaire en rotation avec la roue d'actionnement séquentiel 60. L'aimant 132 possède deux pôles magnétiques Nord et Sud positionnées tous deux dans un même plan perpendiculaire à l'axe de l'arbre 134. L'arbre 134 en question est un arbre qui reçoit la roue d'actionnement séquentiel et la roue dentée de couplage 58 en prise avec le moteur d'entrainement.

La rotation de l'arbre 134 et de l'aimant 132 avec la roue d'actionnement séquentiel 60 crée au niveau du premier capteur de position angulaire 130 un champ magnétique variable qui est converti en une donnée de position angulaire de la roue d'actionnement séquentiel par le premier capteur de position angulaire 130. Ce signal est foumi au circuit électronique de commande 120 du moteur 22 pour asservir la vitesse du moteur à la position angulaire de la roue d'actionnement séquentiel et pour provoquer des phases d'arrêt du moteur lorsque celui-ci est opéré avec un sens de rotation entrainant la roue d'actionnement séquentiel 60, y compris pour des posions distinctes de celles de l'actionnement des cames 80 et 90.

Dans un autre mode de réalisation, le premier capteur de position angulaire 130 peut comporter un simple capteur, par exemple un capteur à effet Hall associé à un aimant d'indexation de la roue d'actionnement séquentiel, indiquant une position angulaire de référence comme par exemple la position de début de cycle d'attachage. Le signal de la position angulaire de référence est alors combiné à une mesure 140 des caractéristiques des phases du moteur telles que par exemple la tension, donnant une position angulaire relative du capteur du rotor du moteur 22, l'ensemble étant calculé avec les caractéristiques de réduction dans un calculateur 180 du circuit électronique de commande 120 pour produire le premier signal de position angulaire. Dans cette fonction, le calculateur 160 fait également partie du premier capteur de position angulaire.

Deux positions d'arrêt particulières sont notamment envisagées. Il s'agit d'une part d'une position, représentée à la figure 5, dans laquelle le crochet 40 est au maximum de sa position ouverte, et d'autre part une position, représentée à la figure 4, dans laquelle le galet presseur 72 est soulevé du galet entraîneur 70 dans un mouvement participant à la coupe du lien.

La position d'ouverture du crochet est une position importante dans laquelle les éléments à attacher peuvent être engagés dans la tête de pose d'attaches 18.

La position relevée du galet est une position facilitant le nettoyage de l'entraîneur mécanique 44 et, le cas échéant le remplacement du galet presseur 72. Elle permet également d'engager un fil d'attache dans l'entraineur d'avancement 44 ou d'en retirer un fil d'attache resté coincé. La sélection de positions d'arrêt et de maintenance peut être effectuée par une interface de commande sur le corps de l'appareil de pose visible par exemple dans les figures 1 à 3, notamment avec un bouton « MODE » qui permet de sélectionner des actions particulières préétablies, conduisant à des commandes du moteur par l'intermédiaire de son circuit électronique de commande et établissant une rotation dans une position prédéterminée de la roue d'actionnement séquentiel. La sélection de positions d'arrêt et de maintenance peut aussi être couplée avec un actionnement particulier de la gâchette 14, par exemple en maintenant l'appui sur cette gâchette pendant une durée prédéterminée, par exemple une durée de 2 secondes, supérieure à un actionnement normal de la gâchette.

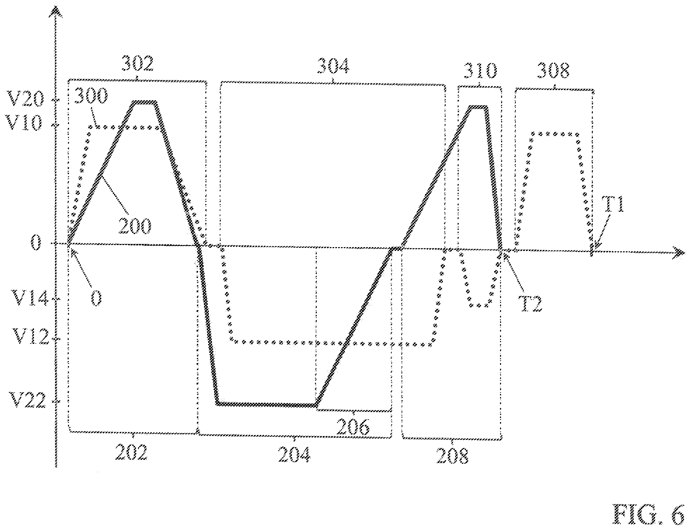

Le fonctionnement de l'appareil 10 pour pose d'attache est encore illustré par la figure 6 qui donne en trait continu une consigne de vitesse 200 de la vitesse de rotation du moteur au cours d'un cycle de pose d'attache. A titre de comparaison, il est Indiqué en trait pointillé la consigne 300 du cycle de la pose d'une attache dans l'état de l'art constitué par l'appareil décrit dans le document EP0783323.

Sur le diagramme, la vitesse de rotation est Indiquée en ordonnée. Des valeurs positives indiquent un sens de rotation du moteur électrique associé à la rotation de la roue d'actionnement séquentiel. Des valeurs négatives Indiquent un sens de rotation opposé du moteur électrique provoquant la rotation du torsadeur. Il s'agit du mode de réalisation préféré avec un moteur unique. Dans le cas où plusieurs moteurs sont utilisés, et en particulier un moteur distinct pour l'actionnement du torsadeur rotatif, les valeurs négatives représentent la consigne de vitesse du moteur électrique associé au torsadeur.

En abscisse est reporté une valeur de temps sur un cycle complet à partir du moment où l'opérateur actionne la gâchette 14 pour réaliser une attache. On considère qu'à l'instant 0 le crochet est ouvert et que des éléments à attacher peuvent être introduits dans la tête de pose d'attaches.

Dans une première phase 202, le moteur électrique associé à la roue d'actionnement séquentiel est actionné. L'avancement du lien et la fermeture du crochet sont ainsi actionnés concomitamment. La roue d'actionnement séquentiel continue à faire avancer le lien jusqu'à son arrivée à l'extrémité de guide fixe. La première came, c'est-à-dire le premier galet 80, arrive alors en contact du levier 82 associé, pour procéder à la coupe du lien en actionnant la guillotine 46 puis se désolidarise du levier 82 pour remettre le galet presseur 72 en pression sur le lien grâce au ressort de rappel 84 avant d'arrêter le moteur. Dans cette première phase, les pentes d'accélération et de décélération sont faibles, tout en donnant une consigne de rotation du moteur jusqu'à un palier de vitesse V20, par exemple de 9 000 tours par minute. La mécanique de l'appareil est ainsi moins sollicitée.

La première phase 202 correspond à une première phase 302 de l'appareil de l'état de la technique.

Dans une deuxième phase 204, le moteur électrique associé à la rotation du torsadeur est actionné. Ceci correspond à un changement du sens de rotation du moteur dans le cas du mode de réalisation proféré à moteur unique,. Lors de cette phase, le torsadeur rotatif est entrainé en rotation et la roue d'actionnement séquentiel restant alors dans une position angulaire fixe. Le' torsadeur réalise l'attache en effectuant un serrage plus ou moins important selon le réglage souhaité par l'utilisateur. L'accélération du moteur en début de cette phase permet d'atteindre un palier de vitesse de rotation V22, sa valeur absolue étant par exemple de 10 000 tours par minute.

La deuxième phase, correspondant à l'actionnement du torsadeur, comprend une phase 206 de ralentissement progressif et lent du moteur. Le début de la phase de ralentissement 206 est calculé par le microprocesseur en fonction du nombre de tours à effectuer pour tenir compte de derniers tours réalisés à une vitesse progressivement plus faible jusqu'à son arrêt dans une position dans laquelle le torsadeur est aligné avec le guide de fil d'attache. La diminution progressive de la vitesse permet alors de positionner précisément le torsadeur de fil d'attache dans sa position prédéterminée directement à l'arrêt du moteur.

La deuxième phase 204 de l'appareil pour pose d'attaches de l'invention peut être comparée à une deuxième phase 304 d'actionnement du torsadeur de l'appareil de l'état de la technique.

On peut noter que la vitesse maximum de rotation V22 du moteur lors de la deuxième phase 204 de l'appareil de l'invention est plus élevée que la vitesse V12 du moteur de l'appareil de l'état de la technique. En revanche, la durée de la deuxième phase 204, y compris la phase de ralentissement 206 est plus brève que la deuxième phase 304 de l'appareil de l'état de la technique.

Après la deuxième phase 204, le moteur électrique associé à la roue d'actionnement séquentiel est une dernière fois activé. Ceci correspond au changement de sens de rotation du moteur unique dans le mode de réalisation préféré. Dans cette phase finale 208, la roue d'actionnement séquentiel achève sa rotation sur un tour complet. Dans la phase finale 208, le torsadeur est arrêté et le crochet 40 est ramené dans sa position d'ouverture initiale grâce au deuxième galet 90 agissant sur le levier 92 tout en actionnant l'entraineur du fil d'attache pour lui faire traverser le torsadeur et l'avancer partiellement dans le crochet. En fin de cycle, le crochet est complètement relevé et le moteur arrêté, prêts pour un nouveau cycle d'attachage.

A titre de comparaison, on peut noter une phase 310 supplémentaire, précédant une phase d'arrêt 308 pour le pistolet attacheur de l'état de l'art. La phase supplémentaire 310 correspond à une ré-indexation du torsadeur compte tenu de la décélération rapide du moteur entre sa vitesse V12 au moment de la formation de la torsade et son arrêt dans la phase 304. Ceci est dû au fait que le capteur à effet Hall de l'appareil de l'état de la technique donne une simple impulsion de position angulaire de l'arbre du torsadeur au moment même où le torsadeur atteint cette position. Ainsi, lors de l'arrêt du moteur, le torsadeur n'est pas positionné précisément compte tenu de son inertie mécanique. La phase complémentaire 310 permet ainsi de commander la rotation du torsadeur avec une vitesse V14 plus faible que la vitesse V12 au moment de la formation de la torsade. L'arrêt intervient dés la détection du prochain aimant. L'énergie de rotation est ainsi bien plus faible et il est plus facile de positionner précisément le torsadeur dés l'arrêt du moteur.

Le moteur du pistolet attacheur de l'état de l'art étant comme déjà indiqué un moteur à courant continu, ses vitesses de rotation sont plus faibles qu'un moteur synchrone triphasé à aimants permanents et il est plus difficile de maitriser des pentes d'accélération et de décélération faibles comme le montrent les phases 302, 304, 308 et 310 d'un cycle d'attachage de cet appareil. Les paliers de vitesse V10, V12 et V14 sont par exemple et respectivement de 7 400, 6 000 et 3 500 tours par minute.

On peut encore noter que dans l'état de l'art la durée T1 totale du cycle est de l'ordre de 500 ms, mais s'agissant d'un moteur à courant continu elle peut varier selon des valeurs de 450 ms lorsque la batterie est chargée à 550 ms lorsqu'elle est déchargée tout en permettant encore la réalisation d'un cycle d'attachage. Elle est supérieure à la durée totale de cycle T2 obtenue avec l'appareil pour pose d'attache de l'invention qui est de l'ordre de 400 ms. L'utilisation à la fois d'un moteur synchrone triphasé à aimants permanents ayant une capacité de vitesse de rotation plus rapide, d'un asservissement de sa vitesse et de l'utilisation de deux capteurs donnant des positions angulaires en continu des principaux organes permet, d'anticiper leur position, d'accélérer la vitesse moyenne du cycle tout en maitrisant les phases d'accélération et de décélération du moteur. Le fonctionnement est certes plus rapide mais aussi plus respectueux de la mécanique, améliorant sa durée de vie et sa fiabilité. On peut noter par ailleurs que la commande numérique du moteur est peu sensible à l'état de charge de la batterie. Ainsi les valeurs de T1 sont quasiment identiques quel que soit cet état de change.

## Revendications

1. Appareil (10) pour pose d'attaches, comprenant :
- un guide de fil (41, 44, 46, 100), pour fil d'attache, s'étendant entre une entrée de fil (20) et une extrémité de guide fixe (100),
- un crochet pivotant (40) présentant une extrémité de crochet libre (43), le crochet formant un tronçon du guide de fil (41) et présentant une liberté de pivotement entre une position ouverte dans laquelle l'extrémité de crochet libre (43) est écartée de l'extrémité de guide fixe (100), et une position fermée dans laquelle l'extrémité de crochet libre (43) est alignée avec l'extrémité de guide fixe (100),
- un entraîneur mécanique (44) de fil d'attache disposé en amont du crochet (40),
- un couteau (46) de sectionnement de fil, le couteau étant disposé en amont du crochet,
- un torsadeur rotatif (30) avec des entraineurs de fil d'attache (32) disposés en amont et en aval du crochet, et en aval du couteau, les entraineurs étant configurés pour intercepter un fil d'attache dans une position d'alignement du torsadeur rotatif avec le guide de fil,
- un moteur électrique (22) relié à un mécanisme de transmission (50) comprenant une roue d'actionnement séquentiel (60) du crochet (40) et du couteau (46), **caractérisé en ce que** l'appareil comprend en outre
- un premier capteur de position angulaire (130) de la roue d'actionnement séquentiel (60), configuré pour délivrer un premier signal de position angulaire continûment variable sur une plage angulaire de rotation de 360 degrés de la roue d'actionnement séquentiel (60), le premier capteur de position angulaire étant associé à au moins l'un parmi la roue d'actionnement séquentiel (60) et le moteur électrique (22),
- un circuit électronique (120) de commande du moteur électrique (22) relié au premier capteur de position angulaire (130) et recevant le premier signal de position angulaire du premier capteur de position angulaire, pour un pilotage du moteur en fonction dudit premier signal de position angulaire.

2. Appareil selon la revendication 1, dans lequel le premier capteur de position angulaire (130) est un capteur à effet Hall associé à au moins un aimant rotatif (132) monté en bout d'arbre, d'un arbre (134) solidaire en rotation avec au moins l'un parmi la roue d'actionnement séquentiel (60) et le moteur électrique (22).

3. Appareil selon la revendication 1, dans lequel le moteur électrique (22) est un moteur synchrone triphasé sans balai à aimants permanents et dans lequel le premier capteur de position angulaire comprend un circuit de mesure (140) d'au moins l'un parmi une tension et un courant des phases du moteur, et une unité de calcul (160) configurée pour établir le premier signal de position angulaire en fonction d'un signal de mesure du circuit de mesure.

4. Appareil selon l'une quelconque des revendications 1 à 3, dans lequel le circuit électrique de commande (120) du moteur électrique (22) comporte une mémoire (121) pour la mémorisation de positions prédéterminées de la roue d'actionnement séquentiel, associées à des phases de commande du moteur.

5. Appareil selon l'une quelconque des revendications précédentes, comprenant en outre un deuxième capteur de position angulaire (110) du torsadeur rotatif (30), un moteur électrique associé au torsadeur rotatif et un circuit électronique de commande dudit moteur électrique associé au torsadeur rotatif, le circuit électronique de commande dudit moteur électrique associé au torsadeur rotatif étant relié au deuxième capteur de position angulaire et recevant un deuxième signal de position angulaire du deuxième capteur de position angulaire pour un pilotage du moteur en fonction dudit deuxième signal de position angulaire.

6. Appareil selon la revendication 5, dans lequel le moteur électrique associé au torsadeur rotatif est le moteur électrique (22) relié au mécanisme de transmission (50) comprenant la roue d'actionnement séquentiel (60) et dans lequel le circuit électronique de commande (120) du moteur électrique associé au torsadeur rotatif est le circuit électronique de commande (120) relié au premier capteur de position angulaire.

7. Appareil selon la revendication 5, dans lequel le moteur électrique associé au torsadeur rotatif est un moteur électrique distinct du moteur électrique relié au mécanisme de transmission (50) comprenant la roue d'actionnement séquentiel (60).

8. Appareil selon la revendication 5, dans lequel le deuxième capteur de position angulaire (110) est un capteur à effet Hall à signal continûment variable sensible à une rotation d'un arbre (54) solidaire en rotation avec le torsadeur (30).

9. Appareil selon la revendication 5, dans lequel le deuxième capteur de position angulaire (110) est associé à deux aimants (112) montés symétriquement sur un support (114) dans un plan perpendiculaire à l'arbre (54) solidaire en rotation avec le torsadeur.

10. Appareil selon l'une quelconque des revendications précédentes, dans lequel le circuit électronique (120) de commande du moteur électrique (22) relié au mécanisme de transmission (50), respectivement le circuit électronique de commande du moteur électrique associé au torsadeur, est configuré pour au moins une première phase d'arrêt (208) de la rotation du moteur électrique relié au mécanisme de transmission (50), respectivement du moteur électrique associé au torsadeur, lors de laquelle la vitesse de rotation est asservie à une position angulaire de la roue d'actionnement séquentiel

11. Appareil selon la revendication 10, dans lequel la première phase d'arrêt (208) est associée à la position fermée du crochet.

12. Appareil selon la revendication 10, dans lequel l'entraineur d'avancement (44) du fil d'attache comprend un galet d'entrainement (70) et un galet presseur (72), le galet presseur étant déplaçable entre une position rapprochée du galet d'entrainement et une position relevée libérant un passage entre le galet presseur et le galet d'entrainement, et dans lequel une phase d'arrêt du moteur (22)est associée à la position relevée du galet presseur.

13. Appareil selon l'une quelconque des revendications précédentes, dans lequel le circuit électronique de commande (120) du moteur électrique (22) relié au mécanisme de transmission (50), respectivement le circuit électronique de commande du moteur électrique associé au torsadeur, est en outre configuré pour au moins une deuxième phase d'arrêt (206) de la rotation du moteur électrique relié au mécanisme de transmission (50), respectivement du moteur électrique associé au torsadeur, lors de laquelle la vitesse de rotation est asservie à une position angulaire du torsadeur (30), la deuxième phase d'arrêt étant associée à la position d'alignement du torsadeur avec le guide de fil.

14. Appareil selon la revendication 1, dans lequel le mécanisme de transmission (50) comporte un accouplement à roue libre (56, 66) venant sélectivement en prise avec la roue d'actionnement séquentiel (60) et avec le torsadeur (30) pour des sens de rotation opposés du moteur électrique (22).

15. Appareil selon la revendication 12, dans lequel la roue d'actionnement séquentiel (60) est une roue dentée reliée au galet d'entrainement (70) par un engrenage (60,74).

## Patentansprüche

1. Gerät (10) zum Anbringen von Befestigungen, umfassend:
- eine Drahtführung (41, 44, 46, 100) für einen Befestigungsdraht, die sich zwischen einer Drahtaufnahme (20) und einem festen Führungsende (100) erstreckt,
- einen schwenkbaren Haken (40), der ein freies Hakenende (43) aufweist, wobei der Haken einen Abschnitt der Drahtführung (41) bildet und einen Schwenk-Freiheitsgrad zwischen einer offenen Position, in der das freie Hakenende (43) von dem festen Führungsende (100) weggeschoben ist, und einer geschlossenen Position, in der das freie Hakenende (43) mit dem festen Führungsende (100) ausgerichtet ist, aufweist,
- einen mechanischen Befestigungsdrahtmitnehmer (44), der oberhalb des Hakens (40) angeordnet ist,
- ein Messer (46) zum Trennen des Drahts, wobei das Messer oberhalb des Hakens angeordnet ist,
- eine sich drehende Verdrillvorrichtung (30) mit Befestigungsdrahtmitnehmern (32), die oberhalb und unterhalb des Hakens angeordnet sind, und wobei die Mitnehmer unterhalb des Messers zum Aufnehmen eines Befestigungsdrahts in eine Ausrichtungsposition der sich drehenden Verdrillvorrichtung mit der Drahtführung konfiguriert sind,
- einen Elektromotor (22), der mit einem Übertragungsmechanismus (50) verbunden ist und ein Rad zur sequenziellen Betätigung (60) für den Haken (40) und das Messer (46) umfasst, **dadurch gekennzeichnet, dass** das Gerät ferner Folgendes umfasst:
- einen ersten Winkelpositionssensor (130) des Rads zur sequenziellen Betätigung (60), der zum Liefern eines stufenlosen ersten Winkelpositionssignals über einen Drehwinkelbereich des Rads zur sequenziellen Betätigung (60) von 360 Grad konfiguriert ist, wobei der erste Winkelpositionssensor dem Rad zur sequenziellen Betätigung (60) und/oder dem Elektromotor (22) zugeordnet ist,
- einen elektronischen Steuerkreis (120) des Elektromotors (22), der mit dem ersten Winkelpositionssensor (130) verbunden ist und das erste Winkelpositionssignal des ersten Winkelpositionssensors zur Steuerung des Motors in Abhängigkeit von dem ersten Winkelpositionssignal empfängt.

2. Gerät nach Anspruch 1, wobei der erste Winkelpositionssensor (130) ein Hall-Sensor ist, der mindestens einem Drehmagneten (132), der am Ende einer Welle montiert ist, einer mit mindestens einem aus dem Rad zur sequenziellen Betätigung (60) und dem Elektromotor (22) drehfest verbundenen Welle (134), zugeordnet ist.

3. Gerät nach Anspruch 1, wobei der Elektromotor (22) ein bürstenloser, dreiphasiger Permanentmagnet-Synchronmotor ist und wobei der erste Winkelpositionssensor eine Messschaltung (140) für mindestens eines aus einer Spannung und einem Strom der Phasen des Motors, und eine Recheneinheit (160) umfasst, die zum Festlegen des ersten Winkelpositionssignals in Abhängigkeit von einem Messsignal der Messschaltung konfiguriert ist.

4. Gerät nach einem der Ansprüche 1 bis 3, wobei der elektrische Steuerkreis (120) des Elektromotors (22) einen Speicher (121) zur Speicherung der vorbestimmten Positionen des Rads zur sequenziellen Betätigung, die mit Steuerphasen des Motors verbunden sind, enthält.

5. Gerät nach einem der vorhergehenden Ansprüche, ferner umfassend einen zweiten Winkelpositionssensor (110) der sich drehenden Verdrillvorrichtung (30), einen Elektromotor, der der sich drehenden Verdrillvorrichtung zugeordnet ist, und einen elektronischen Steuerkreis des Elektromotors, der der sich drehenden Verdrillvorrichtung zugeordnet ist, wobei der elektronische Steuerkreis des der sich drehenden Verdrillvorrichtung zugeordneten Elektromotors mit dem zweiten Winkelpositionssensor verbunden ist und ein zweites Winkelpositionssignal des zweiten Winkelpositionssensors zur Steuerung des Motors in Abhängigkeit von dem zweiten Winkelpositionssignal empfängt.

6. Gerät nach Anspruch 5, wobei der der sich drehenden Verdrillvorrichtung zugeordnete Elektromotor der Elektromotor (22) ist, der mit dem Übertragungsmechanismus (50) verbunden ist und das Rad zur sequenziellen Betätigung (60) umfasst, und wobei der elektronische Steuerkreis (120) des der sich drehenden Verdrillvorrichtung zugeordneten Elektromotors der elektronische Steuerkreis (120) ist, der mit dem ersten Winkelpositionssensor verbunden ist.

7. Gerät nach Anspruch 5, wobei der der sich drehenden Verdrillvorrichtung zugeordnete Elektromotor ein von dem mit dem Übertragungsmechanismus (50) verbundenen Elektromotor, der das Rad zur sequenziellen Betätigung (60) umfasst, separater Elektromotor ist.

8. Gerät nach Anspruch 5, wobei der zweite Winkelpositionssensor (110) ein Hall-Sensor mit stufenlos veränderlichem Signal ist, der auf eine Drehung einer mit der Verdrillvorrichtung (30) drehfest verbundenen Welle (134) reagiert.

9. Gerät nach Anspruch 5, wobei der zweite Winkelpositionssensor (110) mit zwei Magneten (112) verbunden ist, die symmetrisch an einer Halterung (114) auf einer Ebene senkrecht zur mit der Verdrillvorrichtung drehfest verbundenen Welle (54), montiert sind.

10. Gerät nach einem der vorhergehenden Ansprüche, wobei der elektronische Steuerkreis (120) des mit dem Übertragungsmechanismus (50) verbundenen Elektromotors (22) jeweils der elektronische Steuerkreis des der Verdrillvorrichtung zugeordneten Elektromotors für mindestens eine erste Stillstandphase (208) der Drehung des mit dem Übertragungsmechanismus (50) verbundenen Elektromotors jeweils des der Verdrillvorrichtung zugeordneten Elektromotors konfiguriert ist, in deren Verlauf die Drehgeschwindigkeit einer Winkelposition des Rads zur sequenziellen Betätigung unterworfen ist.

11. Gerät nach Anspruch 10, wobei die erste Stillstandphase (208) der geschlossenen Position des Hakens zugeordnet ist.

12. Gerät nach Anspruch 10, wobei der Mitnehmer (44) zum Vorschieben des Befestigungsdrahts eine Antriebsrolle (70) und eine Druckrolle (72) umfasst, wobei die Druckrolle zwischen einer angenäherten Position der Antriebsrolle und einer erhöhten Position, die einen Durchgang zwischen der Druckrolle und der Antriebsrolle freilegt, verschiebbar ist, und wobei eine Stillstandphase des Motors (22) der erhöhten Position der Druckrolle zugeordnet ist.

13. Gerät nach einem der vorhergehenden Ansprüche, wobei der elektronische Steuerkreis (120) des mit dem Übertragungsmechanismus (50) verbundenen Elektromotors (22) jeweils der elektronische Steuerkreis des der Verdrillvorrichtung zugeordneten Elektromotors ferner für mindestens eine zweite Stillstandphase (206) der Drehung des mit dem Übertragungsmechanismus (50) verbundenen Elektromotors jeweils des der Verdrillvorrichtung zugeordneten Elektromotors konfiguriert ist, in deren Verlauf die Drehgeschwindigkeit einer Winkelposition der Verdrillvorrichtung (30) unterworfen ist, wobei die zweite Stillstandphase der Ausrichtungsposition der Verdrillvorrichtung mit der Drahtführung zugeordnet ist.

14. Gerät nach Anspruch 1, wobei der Übertragungsmechanismus (50) eine Freilaufkupplung (56, 66) enthält, die wahlweise mit dem Rad zur sequenziellen Betätigung (60) und mit der Verdrillvorrichtung (30) für entgegengesetzte Drehrichtungen des Elektromotors (22) in Eingriff gelangt.

15. Gerät nach Anspruch 12, wobei das Rad zur sequenziellen Betätigung (60) ein Zahnrad ist, das durch eine Verzahnung (60, 74) mit der Antriebsrolle (70) verbunden ist.

## Claims

1. An apparatus (10) for placing ties, comprising:
- a wire guide (41, 44, 46, 100), for a tie wire, extending between a wire inlet (20) and a fixed guide end (100),
- a pivoting hook (40) having a free hook end (43), the hook forming a section of the wire guide (41) and having a pivoting freedom between an open position in which the free hook end (43) is spaced from the fixed guide end (100), and a closed position in which the free hook end (43) is aligned with the fixed guide end (100),
- a mechanical tie wire driver (44) disposed upstream of the hook (40),
- a wire cutting knife (46), the knife being disposed upstream of the hook,
- a rotary twister (30) with tie wire drivers (32) disposed upstream and downstream of the hook, and downstream of the knife, the drivers being configured to intercept a tie wire in a position of alignment of the rotary twister with the wire guide,
- an electric motor (22) connected to a transmission mechanism (50) comprising a wheel for sequential actuation (60) of the hook (40) and of the knife (46), **characterised in that** the apparatus further comprises
- a first angular position sensor (130) of the sequential actuation wheel (60), configured to deliver a first continuously variable angular position signal over an angular range of 360-degree rotation of the sequential actuation wheel (60), the first angular position sensor being associated with at least one of the sequential actuation wheel (60) and the electric motor (22),
- an electronic circuit (120) for controlling the electric motor (22) connected to the first angular position sensor (130) and receiving the first angular position signal from the first angular position sensor, for driving the motor depending on said first angular position signal.

2. The apparatus according to claim 1, wherein the first angular position signal (130) is a Hall-effect sensor associated with at least one rotary magnet (132) mounted at the shaft tip, of a shaft (134) secured in rotation with at least one of the sequential actuation wheel (60) and the electric motor (22),

3. The apparatus according to claim 1, wherein the electric motor (22) is a permanent magnet brushless three-phase synchronous motor and wherein the first angular position sensor comprises a circuit (140) for measuring at least one of a voltage and a current of the phases of the motor, and a calculation unit (160) configured to establish the first angular position signal depending on a measurement signal of the measurement circuit.

4. The apparatus according to any one of claims 1 to 3, wherein the electric circuit (120) for controlling the electric motor (22) includes a memory (121) for storing predetermined positions of the sequential actuation wheel, which are associated with control phases of the motor.

5. The apparatus according to any one of the preceding claims, further comprising a second angular position sensor (110) of the rotary twister (30), an electric motor associated with the rotary twister and an electronic circuit for controlling said electric motor associated with the rotary twister, the electronic circuit for controlling said electric motor associated with the rotary twister being connected to the second angular position sensor and receiving a second angular position signal from the second angular position sensor for driving the motor depending on said second angular position signal.

6. The apparatus according to claim 5, wherein the electric motor associated with the rotary twister is the electric motor (22) connected to the transmission mechanism (50) comprising the sequential actuation wheel (60) and wherein the electronic circuit (120) for controlling the electric motor associated with the rotary twister is the electronic control circuit (120) connected to the first angular position sensor.

7. The apparatus according to claim 5, wherein the electric motor associated with the rotary twister is an electric motor distinct from the electric motor connected to the transmission mechanism (50) comprising the sequential actuation wheel (60).

8. The apparatus according to claim 5, wherein the second angular position sensor (110) is a continuously variable signal Hall-effect sensor sensitive to a rotation of a shaft (54) which is secured in relation to the twister (30).

9. The apparatus according to claim 5, wherein the second angular position sensor (110) is associated with two magnets (112) symmetrically mounted on a support (114) in a plane perpendicular to the shaft (54) secured in relation to the twister.

10. The apparatus according to any one of the preceding claims, wherein the electronic circuit (120) for controlling the electric motor (22) connected to the transmission mechanism (50), respectively the electronic circuit for controlling the electric motor associated with the twister, is configured for at least one first phase (208) of stopping the rotation of the electric motor connected to the transmission mechanism (50), respectively of the electric motor associated with the twister, during which the speed of rotation is servo-controlled at an angular position of the sequential actuation wheel.

11. The apparatus according to claim 10, wherein the first stop phase (208) is associated with the closed position of the hook.

12. The apparatus according to claim 10, wherein the driver (44) for advancing the tie wire comprises a drive roller (70) and a pressure roller (72), the pressure roller being displaceable between a close position of the drive roller and a raised position releasing a passage between the pressure roller and the drive roller, and wherein a motor stop phase (22) is associated with the raised position of the pressure roller.

13. The apparatus according to any one of the preceding claim, wherein the electronic circuit (120) for controlling the electric motor (22) connected to the transmission mechanism (50), respectively the electronic circuit for controlling the electric motor associated with the twister, is further configured for at least one second phase (206) of stopping the rotation of the electric motor connected to the transmission mechanism (50), respectively of the electric motor associated with the twister, during which the speed of rotation is servo-controlled at an angular position of the twister (30), the second stop phase being associated with the position of alignment of the twister with the wire guide.

14. The apparatus according to claim 1, wherein the transmission mechanism (50) includes a freewheel coupling (56, 66) being selectively engaged with the sequential actuation wheel (60) and with the twister (30) for opposite directions of rotation of the electric motor (22).

15. The apparatus according to claim 12, wherein the sequential actuation wheel (60) is a toothed wheel connected to the drive roller (70) by a gear (60, 74).
